# EUROPEAN PATENT APPLICATION

(11) **EP 4 015 767 A1**
(43) Date of publication of application: **22.06.2022**
(21) Application number: 21206049.5
(22) Date of filing: 02.11.2021
(51) Int. Cl.: E21F 5/02, B01D 47/06

(54) **DUST SUPPRESSION SYSTEM, PARTICULARLY FOR UNDERGROUND WORK SUCH AS TUNNELS AND THE LIKE**

(30) Priority: 17.12.2020 IT 202000031214
(71) Applicant: Ultrafog R&D Srl, 55049 Viareggio (LU) (IT); ITALOIBERICA ENGINEERING GROUP SL, 33002 OVIEDO ( ASTURIAS) (ES)
(72) Inventor: RICCI, Antonina Gabriella, 55049 Viareggio LU (IT); LANCIANO, Mario Bruno, 43121 Parma (IT)
(74) Representative: Modiano, Micaela Nadia

(57) **Abstract**

A dust suppression system (1), particularly for underground work such as tunnels and the like, which comprises a trolley (2) which is adapted to support a tank (3) which is adapted to contain water, the tank being connected to a supply pump (5) driven by a motor (15), the pump feeding a plurality of nozzles (6) for atomizing the water, sensors being provided for the detection of environmental conditions for the activation of the nozzles (6).

## Description

The present invention relates to a dust suppression system, particularly for underground work such as tunnels and the like. More specifically, the invention relates to an atomizer for dust suppression that is adapted to be used in any type of underground work.

As is known, the aspects and principles to be considered in studying ventilation systems for tunnels or for underground work in general, during the excavation phase, are:
- the decrease of pollutants (exhaust gases from the vehicles involved in the work, gas from explosives, dust);
- the maintenance of a level of heat suitable for carrying out the required activities.

The principal heat sources that will be in contact during the steps of excavation are the following:
- rock and the tunnel walls;
- the cutter used;
- motorized vehicles and apparatuses;
- concrete.

In order to be able to effectively dimension the necessary ventilation, first of all a minimum ventilation airspeed must be ensured of 0.5 m/sec at the excavation face.

In addition, it must be verified that the amounts of air are sufficient to ensure the necessary dilution of suspended particles deriving from the emissions of diesel vehicles and from dust.

To ensure the dilution of the exhaust gases, the necessary flow rate of air for every kW of power of diesel engines is 4.08 m³/minute. In order to further minimize the harmful effects of pollution from diesel engines, the use may be considered of oxidizing catalysts to mitigate the production at the exhaust of carbon monoxide and of unburned hydrocarbons, and the use of anti-particulate filters to contain up to 90% of the particulate material present in the exhaust gases.

It is therefore necessary to take great care to evaluate the use of extractor ventilation systems that extract polluted and dust-laden air at its point of origin.

In order to provide a ventilation of this kind, conduits are required that can operate at a negative pressure in order to prevent any leak of polluted air over the extraction distance. This solution has the following drawbacks:
A) Use of pipes made of coated polyester.
   This type requires the installation of fans at the excavation face and, depending on the length of the tunnel, also of intermediate boosters, with great difficulties in transport and in supplying power at low or medium voltage.
   Furthermore, owing to its intrinsic characteristics (leakage coefficient) the distributed losses are very high, venting much of the polluted air along the entire route of the tunnel.
B) Conduits made of solid steel are of course theoretically ideal for their impermeability from the aerodynamic point of view, their resistance to considerable negative and positive pressures and their very low aerodynamic resistance, but they are not taken into consideration owing to their excessive price and the great difficulty associated with their installation.

Therefore, in order to keep the excavation face clean, construction companies are forced to commit enormous financial resources to purchasing or hiring a large number of tubes, fans, valves, cables, electrical switchboards and hiring a large number of qualified technicians.

In addition to the economic aspect, it must be noted that it is sometimes physically impossible to install all this apparatus, in particular for tunnels that have a small cross-section.

The aim of the present invention is to provide a dust suppression system, particularly for underground work such as tunnels and the like, that offers a simplification of the conventional solutions.

Within this aim, an object of the present invention is to provide a dust suppression system, particularly for underground work, the operation of which can be carried out remotely in a control center.

Another object of the present invention is to provide a dust suppression system, particularly for underground work, that has low maintenance costs.

Another object of the present invention is to provide a dust suppression system, particularly for underground work, that has a low energy impact, and which is capable of automatically compensating for environmental factors.

Another object of the present invention is to provide a dust suppression system, particularly for underground work, that is highly reliable, easily and practically implemented and at low cost.

This aim and these and other objects which will become better apparent hereinafter are achieved by a dust suppression system, particularly for underground work such as tunnels and the like, characterized in that it comprises a trolley which is adapted to support a tank which is adapted to contain water, said tank being connected to a supply pump driven by a motor, said pump feeding a plurality of nozzles for atomizing the water, sensors being provided for the detection of environmental conditions for the activation of said nozzles.

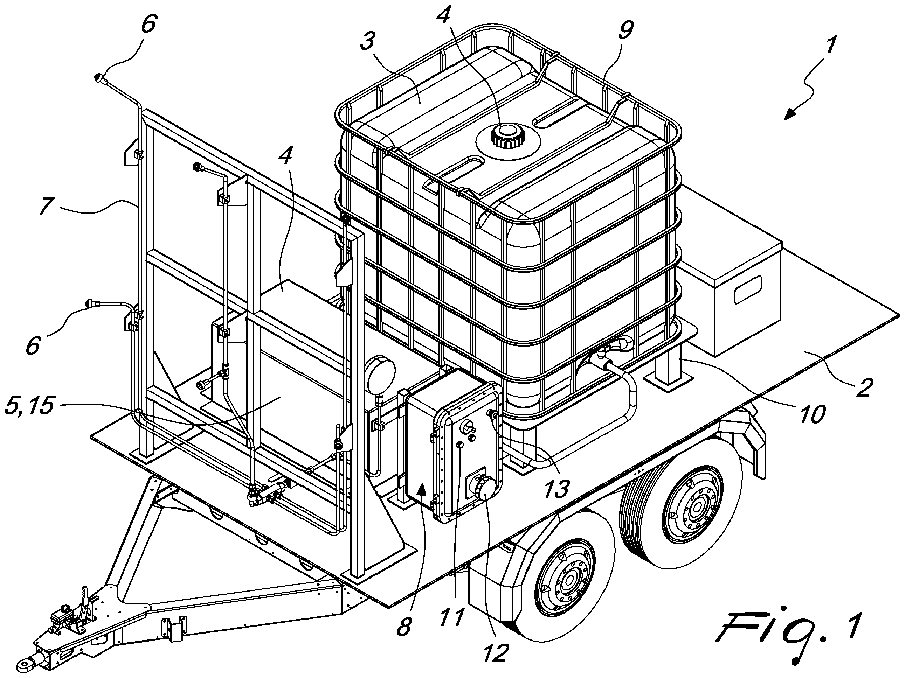

Further characteristics and advantages of the invention will become better apparent from the description of a preferred embodiment of the system according to the invention, which is illustrated for the purposes of example in the accompanying drawing, whose figure is a perspective view of the system according to the present invention.

With reference to the figure, the dust suppression system, particularly for underground work such as tunnels and the like, generally designated by the reference numeral 1, comprises a trolley 2 which is adapted to support a water tank 3, which is provided with an inlet 4 arranged at its top.

Conveniently, the tank 3 is connected to a pumping system which comprises an electric motor 15 connected to a pump 5 that feeds a plurality of nozzles 6 which are arranged at a supporting framework 7 of the trolley 2, and which are oriented so as to atomize the water contained in the tank 3.

Conveniently, the pump 5 can be of the self-priming type with pistons in an oil bath, connected to the electric motor 15.

Conveniently, there is a control unit 8 on board the trolley 2, for controlling the dust suppression system.

Conveniently, the tank 3 can be made of plastic material (for example, high-density polyethylene), anti-UV activated with an outer cage of galvanized steel 9 capable of offering high resistance to aggressive agents. The volume of the tank will be determined as a function of the length of time of use of the apparatus, for example assuming a use for approximately 30 minutes consecutively.

The tank 3 is fixed to the trolley 2 using a special supporting structure 10, for example made of galvanized steel, and will be provided with a flow control valve on the delivery outlet of the tank. The level of the liquid contained in the tank can be verified visually or checked using special instrumentation connected to the control unit 8 (which is responsible for feeding and controlling the pump 5), so as to ensure suitable reporting and alerting of low water level to the operator.

An alternative system for feeding the water to the tank 3 can entail a fixed connection, using adapted hoses, to the pipes of the water mains. The water will need to be supplied, for example, at a minimum feeding pressure of 2 bar.

The pumping system constituted by a motor 15 and by the pump 5 is adapted to dispense water to the atomizer nozzles 6, which are conveniently nozzles of the open type and with dry pipes offering high levels of performance, including a very small diameter of the water droplets.

The nozzles 6 can rotate on the frame of the supporting structure 7, either manually or automatically by way of special control software.

Activation of the dust suppression system according to the invention can be carried out in an automated manner using sensors placed in the field, or installed directly on the trolley 2.

This makes it possible to continuously detect the environmental conditions (temperature, humidity, airspeed etc.), which are measured through the above mentioned sensors.

The system according to the invention further uses a video camera that enables the automatic and/or manual actuation of the number, flow rate, and direction of the dispenser nozzles 6.

The control unit 8 conveniently has a key-operated selector 11 and a kill switch 12 for emergency shutdown and a connection socket 13 for the power supply.

The principle of operation of the system is based on high-pressure watermist technology, with working pressures higher than 34.5 bar.

The use of this technology makes it possible to obtain a greater atomization of the water with the creation of micro-droplets with an average diameter of approximately 50µm, which ensure a better suppression of dust with a lower consumption of water with respect to traditional systems like water cannon, thus reducing accumulations of water in the tunnel in the form of puddles and/or trickles of water.

In substance, the system according to the invention is based on the continuous reading of the environmental conditions (temperature, humidity, airspeed etc.), which are measured using sensors placed in the field or installed directly on the trolley 2, and is also complemented by a video camera, which enables the automatic and/or manual actuation of the number, flow rate, and direction of the dispenser nozzles 6.

The operation of the system can be both manual and automatic using the special sensors positioned either on board the trolley itself or using sensors installed in the field.

The trolley can be positioned at its zone of use with the aid of means of locomotion and connected to the mains electricity supply. Activation of the system is carried out by the operator using the special key-operated selector 11 positioned above the power supply housing on board the trolley. The water tank 3 ensures operation of the system for example for approximately 30 minutes independently of the water mains.

The system can be managed in three different ways:
1. Automatic: the switching on and off the atomizer nozzles 6 is carried out solely by the algorithm of the system according to the invention, in so doing anticipating the admissible dust concentration limit;
2. Local Manual: an operator can manually engage/disengage the atomizer nozzles 6;
3. Remote Manual: an operator can manually engage/disengage the atomizer nozzles 6 from the control center.

In the normal automatic operation of the system according to the invention, using its computerized system, it collects the information received from the environmental control unit and via the processing of the data (humidity, wind, temperature etc.), with the dedicated algorithm of the system according to the invention, it actuates the various modules/zones constituted by the atomizer nozzles 6.

The algorithm continues to keep the elements active for as long as the environmental conditions fall within the preset parameters.

The algorithm also contains a sequence based on specific environmental parameters, so as to avoid continual switching-on and switching-off of the system, thus ensuring a constant operation and a functional linearity.

Both during the step of switching on the nozzles 6, and during the step of switching-off, the algorithm adjusts the power supply in order to reduce the peaks of current absorbed on the line and keep active the modules or the zones (nozzles) that are strictly necessary.

The system according to the invention is capable of storing the environmental data, in order to be able to improve over time the thresholds for engaging and actuating the system; the thresholds are the ones set in manual and/or automatic mode within the algorithm (automatic = the system learns the data and improves the performance of the system, manual = the thresholds are entered by the operator locally or from the remote system).

In practice it has been found that the system according to the invention fully achieves the set aim and objects, in that it makes it possible to automate and simplify the suppression of dust, through the atomization of water dispensed by nozzles arranged on a mobile trolley, the operation of which is controlled by the detection of environmental parameters.

The system, thus conceived, is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

The disclosures in Italian Patent Application No. 102020000031214 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A dust suppression system (1), particularly for underground work such as tunnels and the like, **characterized in that** it comprises a trolley (2) which is adapted to support a tank (3) which is adapted to contain water, said tank being connected to a supply pump (5) driven by a motor (15), said pump (5) feeding a plurality of nozzles (6) for atomizing the water, sensors being provided for the detection of environmental conditions for the activation of said nozzles (6).

2. The system according to claim 1, **characterized in that** it comprises a video camera adapted to allow control of the remote operation of said nozzles (6).

3. The system according to claim 1 or 2, **characterized in that** said sensors are placed in the field.

4. The system according to one or more of the preceding claims, **characterized in that** said sensors are arranged on board said trolley (2).

5. The system according to one or more of the preceding claims, **characterized in that** said sensors detect data relating to humidity, temperature, airspeed and the like.

6. The system according to one or more of the preceding claims, **characterized in that** it comprises a control unit (8) adapted to control the operation of said pump (5) and of said nozzles (6) and to receive data from said sensors.

7. The system according to one or more of the preceding claims, **characterized in that** said nozzles (6) are orientable.

8. A dust suppression method, particularly for underground work and the like, **characterized in that** it comprises the steps of:
continuously detecting the environmental conditions of a tunnel or the like using sensors;
as a consequence of the data detected by said sensors, activating a plurality of nozzles (6) for dispensing atomized water.

9. The method according to claim 8, **characterized in that** said step of activating said sensors is executed automatically.

10. The method according to claim 8, **characterized in that** said step of activating said sensors is executed manually.
